# EUROPEAN PATENT APPLICATION

(11) **EP 4 647 305 A1**
(43) Date of publication of application: **12.11.2025**
(21) Application number: 24174347.5
(22) Date of filing: 06.05.2024
(51) Int. Cl.: B60T 7/22, B60W 50/14

(54) **CONTROLLING BRAKING FORCE OF A VEHICLE**

(71) Applicant: VOLVO TRUCK CORPORATION, 405 08 Göteborg (SE)
(72) Inventor: KOLLBERG, Peter, 448 35 FLODA (SE)
(74) Representative: Kransell & Wennborg KB

(57) **Abstract**

In an aspect, a computer system (14) comprising processing circuitry (11) is provided. The processing circuitry (11) is configured to acquire (S101) data relating to the surrounding environment, detect (S102), when in a manual driving mode, a driver of the vehicle (10) releasing an accelerator (18) of the vehicle (10), and to apply (S103) braking force of a brake (19) of the vehicle (10) in response to the driver releasing the accelerator (18), wherein the braking force being applied is determined based on the acquired surrounding environment data.

## Description

### TECHNICAL FIELD

The disclosure relates generally to controlling braking of a vehicle. In particular aspects, the disclosure relates to control of a braking force to be applied based on surrounding environment data. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Upon a driver of a vehicle such as a truck, bus, car, etc., releases the accelerator, the vehicle will brake by applying e.g. engine braking, retarder braking, regenerative braking, endurance braking, etc. dependent on settings of the vehicle. This type of braking is a complement to primary friction-based braking systems of the vehicle, such as the service brakes, and decreases the risk of brake fade occurring in the primary braking system.

However, the braking being applied upon the driver releasing the accelerator, which in the following will be referred to as engine braking, is not adapted to a surrounding environment of the vehicle.

### SUMMARY

According to a first aspect of the disclosure, a computer system is provided comprising processing circuitry configured to acquire data relating to the surrounding environment, detect, when in a manual driving mode, a driver of the vehicle releasing an accelerator of the vehicle and apply braking force of a brake of the vehicle in response to the driver releasing the accelerator, wherein the braking force being applied is determined based on the acquired surrounding environment data.

The first aspect of the disclosure may seek to resolve an issue of how to adapt a braking force of a brake of the vehicle to a surrounding environment of the vehicle. A technical benefit may include to improve fuel efficiency of the vehicle and/or traffic security upon applying a braking force of a brake of the vehicle.

In some examples, the processing circuitry is configured to instruct the driver via a vehicle interface to release the accelerator of the vehicle based on the acquired surrounding environment data. A technical benefit may include to further improve the adaption of the braking force to the acquired surrounding environment data.

In some examples, the processing circuitry is configured to acquire the data relating to the surrounding environment by monitoring the surrounding environment of the vehicle using a sensor configured to capture said data.

In some examples, the sensor comprises one or more of a radar, lidar or camera sensor of the vehicle.

In some examples, the processing circuitry is configured to acquire the data relating to the surrounding environment by monitoring the surrounding environment of the vehicle using a wireless communication device configured to capture said data.

In some examples, said data is Global Positioning System (GPS) data.

In some examples, the acquired surrounding environment data is configured to be related to an upcoming obstacle.

In some examples, the acquired surrounding environment data is configured to indicate a distance to the upcoming obstacle.

In some examples, the acquired surrounding environment data is configured to be related to a speed limit of a stretch of road being travelled by the vehicle.

In some examples, the acquired surrounding environment data is configured to be related to topography of the surrounding environment.

In some examples, the acquired surrounding environment data is configured to indicate one or more of inclination of an upcoming uphill slope or an upcoming downhill slope, or radius of an upcoming curve.

In some examples, the acquired surrounding environment data is configured to be related to weather conditions.

In some examples, the processing circuitry is configured to, upon determining the braking force, take into account a current speed and/or weight of the vehicle.

In some examples, the brake being applied comprises one or more of an engine brake, retarder brake, regenerative brake, and endurance brake.

In some examples, the processing circuitry is configured to, upon determining the braking force, supply the acquired surrounding environment data to a braking force estimation function being configured to output an indication of the braking force to be applied.

In some examples, the braking force estimation function is a machine-learning (ML) model, an artificial intelligence (AI) model, an algorithm or a simulation model being trained using surrounding environment data pertaining to different scenarios for the surrounding environment.

In some examples, a vehicle is provided comprising the computer system of the first aspect.

According to a second aspect of the disclosure, a computer-implemented method is provided comprising acquiring data relating to the surrounding environment, detecting, when in a manual driving mode, a driver of the vehicle releasing an accelerator of the vehicle and applying braking force of a brake of the vehicle in response to the driver releasing the accelerator, wherein the braking force being applied is determined based on the acquired surrounding environment data.

In some examples, a computer program product is provided comprising program code for performing, when executed by the processing circuitry, the method of the second aspect.

In some examples, a non-transitory computer-readable storage medium is provided comprising instructions which when executed by the processing circuitry cause the processing circuitry to perform the method of the second aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 illustrates a vehicle in the form of a truck in which examples of the present disclosure may be implemented.
FIG. 2 shows an exemplary system diagram of a computer system with which the truck of FIG. 1 is equipped according to the present disclosure.
FIG. 3 illustrates an example of the disclosure where a vehicle approaches an upcoming vehicle and controls a braking force in response thereto.
FIG. 4 illustrates another example of the disclosure where a vehicle approaches an upcoming vehicle and controls a braking force in response thereto.
FIG. 5 shows a flowchart illustrating an example method according to the present disclosure.
FIG. 6 illustrates an example of the disclosure where a vehicle travels in an uphill slope and controls a braking force in response thereto.
FIG. 7 illustrates an example of the disclosure where a vehicle travels in a downhill slope and controls a braking force in response thereto.
FIG. 8 illustrates another example of the disclosure where a vehicle approaches an upcoming sharp curve and controls a braking force in response thereto.
FIG. 9 shows a flowchart illustrating another example method according to the present disclosure.
FIG. 10 is a schematic diagram of a computer system for implementing examples disclosed herein.

### DETAILED DESCRIPTION

Aspects set forth below represent the necessary information to enable those skilled in the art to practice the disclosure.

Upon a driver of a vehicle such as a truck, bus, car, etc., releases the accelerator, the vehicle will brake by applying e.g. engine braking, retarder braking, regenerative braking, endurance braking, etc. dependent on settings of the vehicle. This type of braking is a complement to primary friction-based braking systems of the vehicle, such as the service brakes, and decreases the risk of brake fade occurring in the primary braking system.

However, the braking force being applied upon the driver releasing the accelerator, which in the following will be referred to as engine braking, is not adapted to a surrounding environment of the vehicle.

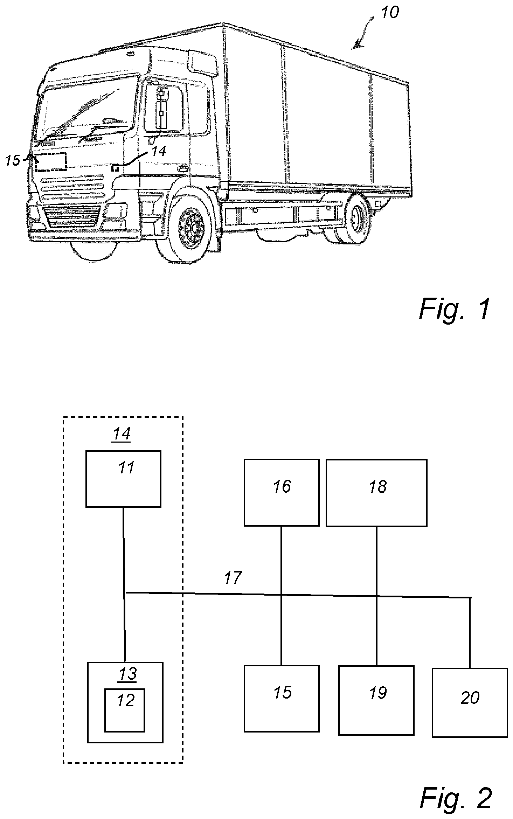

FIG. 1 illustrates a vehicle in the form of a truck 10 in which examples of the present disclosure may be implemented, the truck 10 being equipped with a computer system 14 e.g. in the form of a so-called Electronic Control Unit (ECU) controlling operation of the truck 10. The ECU 14 is typically in communicative connection with one or more sensors 15 of the truck 10, such as e.g. radar, lidar, cameras, etc., for monitoring the surrounding environment of the truck 10 in order to acquire data relating to the surrounding environment, such as e.g. other vehicles, topography data in the form of for instance uphill or downhill slopes being encountered, any sharp curves being approached, speed limits, etc., as will be discussed in more detail in the following. Information recorded by the sensors 15, e.g. topographical data, may be stored either in connection to the sensors themselves or in connection to the ECU 14 for subsequent use.

By acquiring the surrounding environment data using the sensor 15, the ECU 14 may in response thereto apply an appropriate braking force upon the driver releasing the accelerator. For instance, in a scenario where numerous other vehicles are detected in the surrounding environment, a greater braking force may be applied for safety reasons as compared to a scenario where few or no vehicles are detected. In another scenario, if upon the user releasing the accelerator the acquired surrounding environment data indicates that the truck 10 is close to reaching the maximum speed limit of the stretch of road being travelled, then a higher braking force will typically be applied as compared to a scenario where the truck 10 travels at a speed below the maximum allowed speed limit. Thus, the braking force to be applied by the brake is controlled based on surrounding environment data.

Although the vehicle 10 in FIG. 1 is depicted as a heavy-duty truck, examples of the present disclosure may be implemented in other types of vehicles, such as in passenger cars, busses, light-weight trucks, mid-weight trucks, construction equipment, motorcycles, etc. The vehicle 10 may be an internal combustion engine (ICE) vehicle, a battery electric vehicle (BEV) or a hybrid vehicle combining the two technologies.

FIG. 2 shows an exemplary system diagram of the computer system 14 with which the truck 10 of FIG. 1 is equipped according to the present disclosure. The computer system 14 will in the following be exemplified by an ECU.

The ECU 14 generally comprises a processing unit 11 embodied in the form of one or more microprocessors arranged to execute a computer program 12 downloaded to a storage medium 13 associated with the microprocessor, such as a Random Access Memory (RAM), a Flash memory or a hard disk drive. The processing unit 11 is arranged to cause the ECU 14 to perform desired operations when the appropriate computer program 12 comprising computer-executable instructions is downloaded to the storage medium 13 and executed by the processing unit 11. The storage medium 13 may also be a computer program product comprising the computer program 12. Alternatively, the computer program 12 may be transferred to the storage medium 13 by means of a suitable computer program product, such as a Digital Versatile Disc (DVD) or a memory stick. As a further alternative, the computer program 12 may be downloaded to the storage medium 13 over a network. The processing unit 11 may alternatively be embodied in the form of a digital signal processor (DSP), an application specific integrated circuit (ASIC), a field-programmable gate array (FPGA), a complex programmable logic device (CPLD), etc. The processing device 11 will in the following be referred to as a central processing unit (CPU).

The ECU 14 may further be in communicative connection comprise a wireless transmitter/receiver 16, commonly referred to as a transceiver (TRX), being configured to communicate with remote devices such as e.g. cloud servers, other vehicles and/or appropriate components arranged in the truck 10 being capable of wireless communication. The wireless communication of the transceiver may be performed for instance via radio frequency (RF), Bluetooth, a wi-fi provided by a local router, etc. Similar to the sensor 15, the transceiver 16 may further act as a data acquisition device for collecting the surrounding environment data measurement data. For instance, the transceiver 16 may as surrounding environment data collect Global Positioning System (GPS) data.

Further shown in FIG. 2 is the sensor 15 (radar, lidar, camera, etc.) which also may be used as a data acquisition device for collecting the surrounding environment data. As is understood, the data acquisition undertaken by the ECU 14 to collect the surrounding environment data may be performed by collecting the data both via the transceiver 16 and the sensor 15.

Communication between the various components illustrated in FIG. 2 may occur via e.g. a Controller Area Network (CAN), a Local Interconnect Network (LIN), Ethernet, etc., utilizing an electronic communication bus 17. Further shown is an accelerator 18 in the form of an accelerator pedal managed by a foot of the driver or an accelerator bar handled by the driver using a hand, as well as a brake function 19 for applying a braking force as discussed hereinabove. Also shown is a human-machine interface (HMI) 20 via which the ECU 14 can provide the driver with information (and possibly via which the driver can provide the ECU 14 with information).

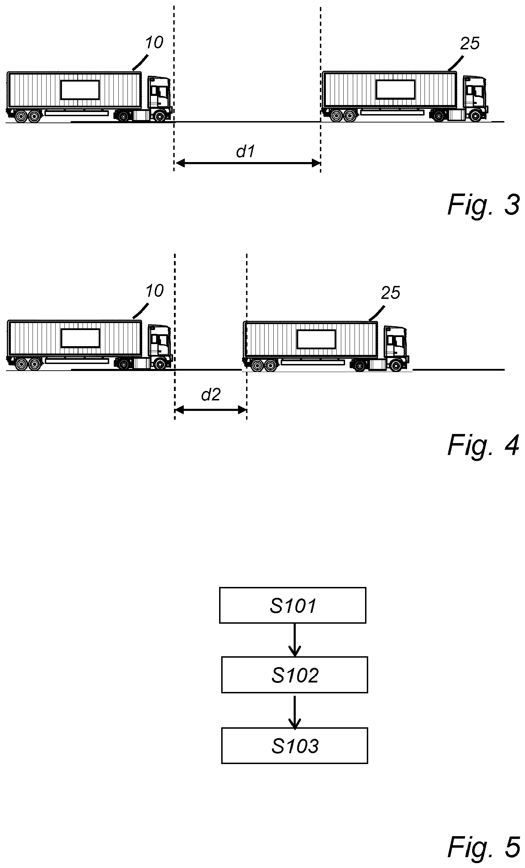

FIG. 3 and FIG. 4 each illustrates an example of the disclosure where the truck 10 approaches an upcoming truck 25. Reference is further made to FIG. 5 showing a flowchart illustrating a method according to an example of the disclosure.

Thus, while the truck 10 approaches the upcoming truck 25, the sensor 15 (being e.g. a radar, lidar or camera device) acquires in S101 data relating to the surrounding environment. In this particular example, the sensor 15 measures a distance d1, d2 to the upcoming truck 25, and may further also measure the speed and/or acceleration of the truck 10 and/or the speed/acceleration of the upcoming truck 25.

Upon the ECU 14 detecting in S102 the driver of the truck 10 releasing the accelerator 18 when the truck 10 is in a manual driving mode, the ECU 14 applies in S103 a braking force of the brake 19, in this example in the form of an engine brake being applied for the truck 10 in response to the driver releasing the accelerator 18, wherein degree of the braking force being applied by the engine brake 19 is determined based the acquired surrounding environment data; in this particular example the determined distance d1, d2 to the upcoming truck 25. As mentioned, the speed of the truck 10, the speed of the upcoming truck 25 or the relative speed of the two trucks 10, 25 may further be taken into account, as may the acceleration of the trucks 10, 25.

Thus, with reference to FIG. 3, assuming that the distance d1 to the upcoming truck 25 is considered relatively great, such as above a preconfigured distance threshold value T, it may be envisaged that the ECU 14 determines that only a small braking force is applied when activating the engine brake 19, or even that the truck 10 is allowed to free roll and thus that zero braking force is applied, thereby advantageously increasing fuel efficiency of the truck 10 as well as driver comfort and even traffic security. Similarly, if e.g. the speed of the truck 10 is relatively low (or the speed of the upcoming truck 25 is relatively high), the ECU 14 may determine that only a small braking force is to be applied when activating the engine brake 19.

In the scenario of FIG. 4, assuming that the distance d2 to the upcoming truck 25 is considered small, such as below the preconfigured distance threshold value T, it may be envisaged that the ECU 14 determines that for safety reason a relatively great braking force should be applied when activating the engine brake 19, thereby advantageously providing driver safety. Hence, in both examples, the ECU 14 advantageously controls the braking force to be applied by the brake 19 in S 103 based on the surrounding environment data.

In an example, the ECU 14 may have access to a braking force estimation function being configured to determine the degree of braking force to be applied based on said surrounding environment data, in the above examples exemplified in the form of the distance d1, d2 to the upcoming truck 25.

In such an example, the acquired surrounding environment data may be supplied to the braking force estimation function, being e.g. an algorithm, a machine-learning (ML) model, an artificial intelligence (AI) model, a simulation model, etc. For instance, it may be that the simulation of a great number of traffic scenarios has been undertaken, wherein the resulting simulation model is supplied with data, in this example data indicating distance d1, d2 to the upcoming truck 25. The simulation model will thus output data indicating the braking force to be applied, where a shorter distance results in a greater braking force being applied. In other words, the braking force estimation function may be trained using surrounding environment data pertaining to different scenarios for the surrounding environment and subsequently output data reflecting a best solution for a given scenario.

In an example, not only is the actual distance d2 taken into account, but further also e.g. a current speed and/or gear of the truck 10, where a higher speed and/or gear typically would imply a greater braking force being applied. As is understood, a weight of the truck 10 may further be taken into account since the weight generally affects braking distance. Further, while an object in the form of another vehicle 20 is exemplified to be detected in FIG. 3 and FIG. 4, other objects may be envisaged, such as pedestrians, traffic signs and traffic signals such as red lights, etc.

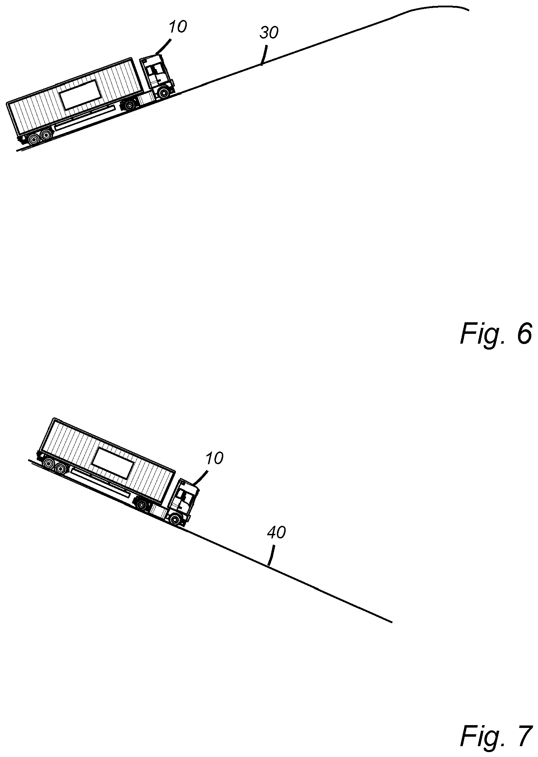

FIG. 6 and FIG. 7 illustrate two examples where in the first of example of FIG. 6, the truck 10 travels an uphill slope 30 while in the second of example of FIG. 7, the truck 10 travels a downhill slope 40.

In FIG. 6, upon the ECU 14 acquiring surrounding environment data in S 101 and concluding from the data that the truck 10 is traveling uphill 30; when the driver releases the accelerator 18 in S 102, the ECU 14 will in S 103 generally not apply any braking force at all and thus allow the truck 10 to free roll uphill 30, again advantageously providing for high fuel efficiency of the truck 10.

In FIG. 7, upon the ECU 14 acquiring surrounding environment data in S 101 and concluding from the data that the truck 10 is traveling downhill 40; when the driver releases the accelerator 18 in S 102, the ECU 14 will further from the acquired sensor data determine a maximum speed limit that is allowed in the downhill 40. If there is a risk that the truck 10 will exceed this maximum limit upon the driver releasing the accelerator 18 in S 102, the ECU 14 will apply a braking force of the engine brake 19 such that the truck 10 does not exceed the speed limit when travelling in the downhill, even if a certain overspeed above the speed limit may be allowed, in particular towards the end of the downhill, in order to enable a longer freeroll of the truck 10 after the downhill slope to provide for fuel efficiency.

Depending on e.g. the inclination of the uphill slope 30 and the downhill slope 40, the previously mentioned braking force estimation function may determine a braking force to be applied upon activating the brake 19. For instance, the sensor 15 measures the inclination of the downhill slope 40 and the degree of inclination is supplied to the above-mentioned simulation model, which will output a proposed braking force to be applied by the engine brake 19 in order for the truck 10 to not exceed the speed limit given the measured inclination of the downhill slope 40. As is understood, an alternative to the sensor 15 measuring the inclination is that the ECU 14 has access to map information, such as e.g. GPS data, from which the inclination is determined. As further is understood, if a sufficient braking force cannot be applied using the engine brake 19, a service brake of the truck 10 may be activated to achieve a greater braking force.

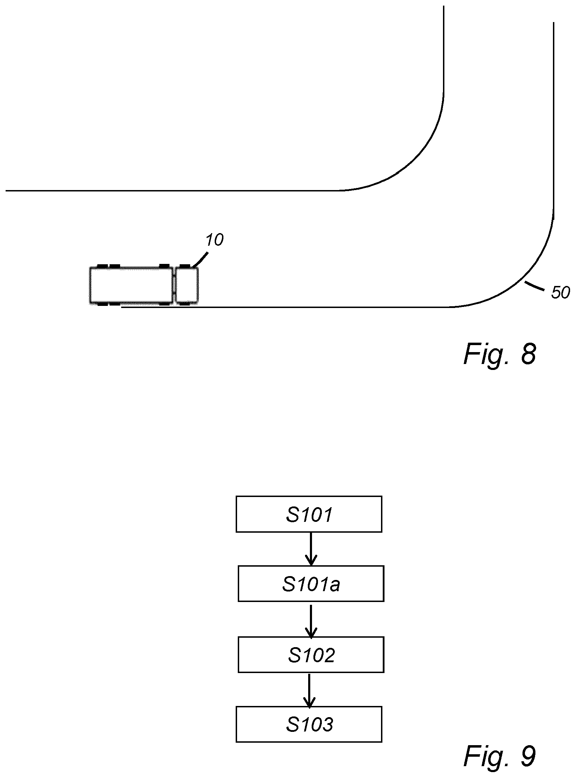

FIG. 8 illustrates yet an example where the truck 10 approaches a sharp curve 50 detected by the ECU 14 acquiring surrounding environment data in S101 by utilizing the camera sensor 15 or by collecting e.g. GPS data. When the driver releases the accelerator 18 as detected by the ECU 14 in S 102, the ECU 14 will apply a relatively great braking force of the engine brake 19 to avoid the truck 10 taking the sharp curve 50 at a too high speed.

As is understood, while it may be envisaged that the uphill slope 30 of FIG. 6, the downhill slope 40 of FIG. 7 and a curve radius of the sharp curve 50 is detected from surrounding environment data captured by the sensor 15 being e.g. a lidar, radar or camera senor, it may alternatively be envisaged that the data is acquired by the transceiver 16 in the form of e.g. Global Positioning System (GPS) data indicating the inclination of the slopes 30, 40 or the radius of the curve 50.

With reference to FIG. 4, FIG. 7 and further to FIG. 9 showing a flowchart illustrating a method according to another example of the disclosure; in an example it is envisaged that in a scenario where a braking force needs to be applied, it may be envisaged that after the ECU 14 has acquired the surrounding environment data in S 101 using the sensor 15, the ECU 14 determines that given the acquired data - e.g. the short distance d2 to the upcoming truck 25 of FIG. 4 or the steep downhill slope 40 of FIG. 7 - it is preferrable that the driver releases the accelerator 18.

Thus, in this example, the ECU 14 signals to the driver in S101a via the HMI 20 that the driver indeed should release the accelerator 18, e.g. due to the approaching upcoming truck 25 or the steep inclination of the downhill 40, whereupon the driver releases the accelerator 18 and the ECU 14 detects the accelerator release in S102 and determines the braking force to be applied by the engine brake 19 in S 103 as previously discussed in response to the accelerator 18 being released.

In a further example, weather conditions are taken into account as surrounding environment data. For instance, in case of rainy weather, the road typically becomes slippery, in which case a lower braking force may need to be applied during a longer time period to shorten the braking distance and avoid the truck 10 slipping on the road surface, or a deceleration is performed to approach the slippery road surface at a lower speed.

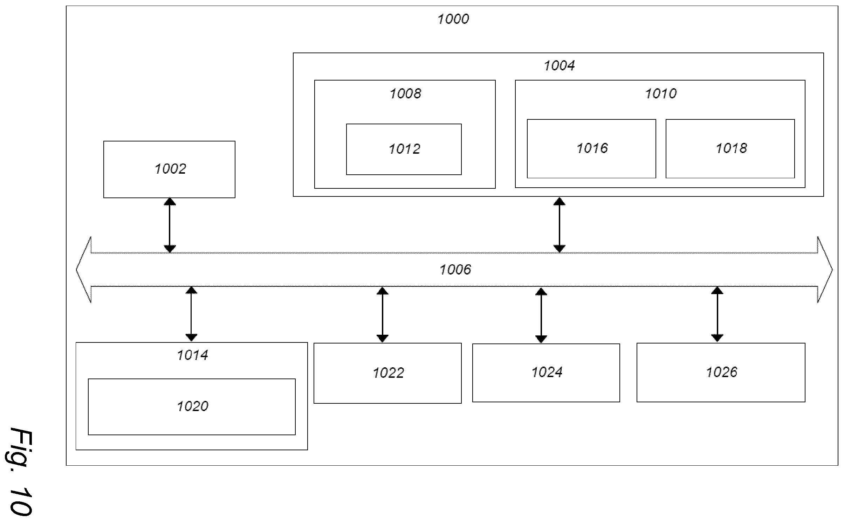

FIG. 10 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include a processor device 1002 (may also be referred to as a control unit), a memory 1004, and a system bus 1006. The computer system 1000 may include at least one computing device having the processor device 1002. The system bus 1006 provides an interface for system components including, but not limited to, the memory 1004 and the processor device 1002. The processor device 1002 may include any number of hardware components for conducting data or signal processing or for executing computer code stored in memory 1004. The processor device 1002 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processor device 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with a processor device 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program product 1020 stored on a transitory or non-transitory computer-usable or computer-readable storage medium (e.g., single medium or multiple media), such as the storage device 1014, which includes complex programming instructions (e.g., complex computer-readable program code) to cause the processor device 1002 to carry out actions described herein. Thus, the computer-readable program code can comprise software instructions for implementing the functionality of the examples described herein when executed by the processor device 1002. The processor device 1002 may serve as a controller or control system for the computer system 1000 that is to implement the functionality described herein.

The computer system 1000 also may include an input device interface 1022 (e.g., input device interface and/or output device interface). The input device interface 1022 may be configured to receive input and selections to be communicated to the computer system 1000 when executing instructions, such as from a keyboard, mouse, touch-sensitive surface, etc. Such input devices may be connected to the processor device 1002 through the input device interface 1022 coupled to the system bus 1006 but can be connected through other interfaces such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may also include a communications interface 1026 suitable for communicating with a network as appropriate or desired.
Example 1. A computer system (14) comprising processing circuitry (11) configured to:
   acquire (S101) data relating to the surrounding environment;
   detect (S102), when in a manual driving mode, a driver of the vehicle (10) releasing an accelerator (18) of the vehicle (10); and
   apply (S103) braking force of a brake (19) of the vehicle (10) in response to the driver releasing the accelerator (18), wherein the braking force being applied is determined based on the acquired surrounding environment data.
Example 2. The computer system (14) of example 1, the processing circuitry (11) being configured to:
   instruct (S101a) the driver via a vehicle interface (20) to release the accelerator (18) of the vehicle (10) based on the acquired surrounding environment data.
Example 3. The computer system (14) of any one of the preceding examples, the processing circuitry (11) being configured to acquire (S101) the data relating to the surrounding environment by monitoring the surrounding environment of the vehicle (10) using a sensor (15) configured to capture said data.
Example 4. The computer system (14) of any one of the preceding examples, the sensor (15) comprising one or more of a radar, lidar or camera sensor of the vehicle (10).
Example 5. The computer system (14) of any one of the preceding examples, the processing circuitry (11) being configured to acquire (S101) the data relating to the surrounding environment by monitoring the surrounding environment of the vehicle (10) using a wireless communication device (16) configured to capture said data.
Example 6. The computer system (14) of example 5, said data being Global Positioning System, GPS, data.
Example 7. The computer system (14) of any one of the preceding examples, the acquired surrounding environment data being configured to be related to an upcoming obstacle (20).
Example 8. The computer system (14) of example 7, the acquired surrounding environment data being configured to indicate a distance to the upcoming obstacle (20).
Example 9. The computer system (14) of any one of the preceding examples, the acquired surrounding environment data being configured to be related to a speed limit of a stretch of road being travelled by the vehicle (10).
Example 10. The computer system (14) of any one of the preceding examples, the acquired surrounding environment data being configured to be related to topography of the surrounding environment.
Example 11. The computer system (14) of examples 10, the acquired surrounding environment data being configured to indicate one or more of inclination of an upcoming uphill slope (30) or an upcoming downhill slope (40), or radius of an upcoming curve (50).
Example 12. The computer system (14) of any one of the preceding examples, the acquired surrounding environment data being configured to be related to weather conditions.
Example 13. The computer system (14) of any one of the preceding examples, the processing circuitry (11) being configured to, upon determining the braking force:
   take into account a current speed and/or weight of the vehicle (10).
Example 14. The computer system (14) of any one of the preceding examples, the brake (19) being applied comprising one or more of an engine brake, retarder brake, regenerative brake, and endurance brake.
Example 15. The computer system (14) of any one of the preceding examples, the processing circuitry (11) being configured to, upon determining the braking force:
   supply the acquired surrounding environment data to a braking force estimation function being configured to output an indication of the braking force to be applied.
Example 16. The computer system (14) of example 15, the braking force estimation function being a machine-learning, ML, model, an artificial intelligence, AI, model, an algorithm or a simulation model being trained using surrounding environment data pertaining to different scenarios for the surrounding environment.
Example 17. A vehicle (10) comprising the computer system (14) of any of examples 1-16.
Example 18. A computer-implemented method, comprising:
   acquiring (S101) data relating to the surrounding environment;
   detecting (S102), when in a manual driving mode, a driver of the vehicle (10) releasing an accelerator (18) of the vehicle (10); and
   applying (S103) braking force of a brake (19) of the vehicle (10) in response to the driver releasing the accelerator (18), wherein the braking force being applied is determined based on the acquired surrounding environment data.
Example 19. A computer program product comprising program code (13) for performing, when executed by the processing circuitry (11), the method of example 18.
Example 20. A non-transitory computer-readable storage medium (12) comprising instructions (13) which when executed by the processing circuitry (11) cause the processing circuitry (11) to perform the method of example 18.

The operations described in any of the exemplary aspects herein are described to provide examples and discussion. The operations may be performed by hardware components, may be embodied in machine-executable instructions to cause a processor to perform the operations, or may be performed by a combination of hardware and software. Although a specific order of operations may be shown or described, the order of the operations may differ. In addition, two or more operations may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, operations, elements, and/or components, but do not preclude the presence or addition of one or more other features, integers, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system (14) comprising processing circuitry (11) configured to:
acquire (S101) data relating to the surrounding environment;
detect (S102), when in a manual driving mode, a driver of the vehicle (10) releasing an accelerator (18) of the vehicle (10); and
apply (S103) braking force of a brake (19) of the vehicle (10) in response to the driver releasing the accelerator (18), wherein the braking force being applied is determined based on the acquired surrounding environment data.

2. The computer system (14) of claim 1, the processing circuitry (11) being configured to:
instruct (S101a) the driver via a vehicle interface (20) to release the accelerator (18) of the vehicle (10) based on the acquired surrounding environment data.

3. The computer system (14) of any one of the preceding clams, the processing circuitry (11) being configured to acquire (S101) the data relating to the surrounding environment by monitoring the surrounding environment of the vehicle (10) using a sensor (15) configured to capture said data.

4. The computer system (14) of any one of the preceding clams, the processing circuitry (11) being configured to acquire (S101) the data relating to the surrounding environment by monitoring the surrounding environment of the vehicle (10) using a wireless communication device (16) configured to capture said data.

5. The computer system (14) of claim 4, said data being Global Positioning System, GPS, data.

6. The computer system (14) of any one of the preceding clams, the acquired surrounding environment data being configured to be related to an upcoming obstacle (20).

7. The computer system (14) of any one of the preceding clams, the acquired surrounding environment data being configured to be related to a speed limit of a stretch of road being travelled by the vehicle (10).

8. The computer system (14) of any one of the preceding clams, the acquired surrounding environment data being configured to be related to topography of the surrounding environment.

9. The computer system (14) of claim 8, the acquired surrounding environment data being configured to indicate one or more of inclination of an upcoming uphill slope (30) or an upcoming downhill slope (40), or radius of an upcoming curve (50).

10. The computer system (14) of any one of the preceding clams, the processing circuitry (11) being configured to, upon determining the braking force:
supply the acquired surrounding environment data to a braking force estimation function being configured to output an indication of the braking force to be applied.

11. The computer system (14) of claim 10, the braking force estimation function being a machine-learning, ML, model, an artificial intelligence, AI, model, an algorithm or a simulation model being trained using surrounding environment data pertaining to different scenarios for the surrounding environment.

12. A vehicle (10) comprising the computer system (14) of any of claims 1-11.

13. A computer-implemented method, comprising:
acquiring (S101) data relating to the surrounding environment;
detecting (S102), when in a manual driving mode, a driver of the vehicle (10) releasing an accelerator (18) of the vehicle (10); and
applying (S103) braking force of a brake (19) of the vehicle (10) in response to the driver releasing the accelerator (18), wherein the braking force being applied is determined based on the acquired surrounding environment data.

14. A computer program product comprising program code (13) for performing, when executed by the processing circuitry (11), the method of claim 13.

15. A non-transitory computer-readable storage medium (12) comprising instructions (13) which when executed by the processing circuitry (11) cause the processing circuitry (11) to perform the method of claim 13.
